# EUROPEAN PATENT SPECIFICATION

(11) **EP 1 007 875 B1**
(45) Date of publication and mention of the grant of the patent: **25.06.2003**
(21) Application number: 98942606.9
(22) Date of filing: 23.07.1998
(51) Int. Cl.: F16L 33/207

(54) **INSERT FOR CONNECTORS FOR HIGH-PRESSURE RUBBER HOSES HAVING IMPROVED TIGHTNESS CHARACTERISTICS**
ANSCHLUSSSTÜCK FÜR DRUCKMITTELSCHLAUCH AUS GUMMI MIT VERBESSERTER DICHTIGKEIT
CANULE POUR RACCORDS POUR FLEXIBLES HAUTE PRESSION EN CAOUTCHOUC PRESENTANT DES CARACTERISTIQUES D'ETANCHEITE AMELIOREES

(30) Priority: 03.09.1997 IT MI972008
(43) Date of publication of application: 14.06.2000
(73) Proprietor: MANULI RUBBER INDUSTRIES S.p.A., 63100 Ascoli Piceno (IT)
(72) Inventor: SEGHI, Paolo, I-63100 Ascoli Piceno (IT); AMADEI, Vittorio, I-24040 Boltiere (IT)
(74) Representative: Modiano, Guido, Dr.-Ing.
(86) International application number: EP9804625
(87) International publication number: WO99011965

(56) References cited:
- EP-A- 0 555 650
- DE-B- 1 247 092
- DE-U- 29 510 265

## Description

### Technical field

The present invention relates to an insert for connectors for high-pressure rubber hoses having improved tightness characteristics. More particularly, the invention relates to a connector for hoses with helical and braided reinforcing webs.

### Background Art

Conventionally the field of high-pressure hoses generally employs hoses formed with a rubber substrate whereon a reinforcement lining, made of steel or textile yarns, is applied, an additional rubber sheath being arranged over the lining.

The high-pressure hoses are connected to each other or to devices by using connectors constituted by an insert, at the ends of which the hoses to be connected are inserted, and by a locking ring which can be fitted over an end of the insert like a sleeve, to anchor the hose to the connector.

The high-pressure hose connector, in which for example a fluid such as oil flows, must accordingly ensure both anchoring to the hose and tightness. In practice, it must be able to withstand the stresses induced by the stream of high-pressure fluid that flows inside the hoses, preventing its infiltration between the substrate and the insert, with consequent external leakage of oil.

Moreover, since the pressure inside the hose would tend to make the insert exit from the end of the hose where it is inserted, a ring is provided which internally has a toothed profile in order to provide anchoring by making contact with the metallic or textile reinforcement by circumferential clamping.

The teeth of the ring can perforate the outer rubber sheath of the high-pressure hose or the sheath can even be removed so that the teeth of the ring rest directly against the reinforcement made of metal or textile material.

This type of connector entails a first drawback due to the fact that the pressurized fluid flowing inside the hoses can overcome the contact force of the ring, thus triggering a leak of fluid which passes between the rubber and the insert.

A conventional insert generally has quadrangular grooves arranged on its outer surface in order to allow the rubber substrate of the high-pressure hose to enter the cavities formed by the quadrangular grooves and behave like an O-ring.

The drawbacks arise at the outer edges, i.e., on the blending portions of the grooves, where breakage can be triggered with an unstoppable tendency to propagate.

The pressure of the ring on the outer sheath of the rubber hose, during tightening, produces a translatory motion of the underlying hose and causes it to protrude partially because the rubber is incompressible, thus generating a traction stress in the substrate which accordingly can be affected by circumferential tearing.

The grooves of the outer surface of the insert are discontinuities where stresses and deformations concentrate, with the consequence that the propagation of tears during use can accelerate.

Moreover, under pressure the hose deforms and changes from moving in the region directly ahead of the insert to becoming jammed under the insert. This produces additional cyclic stresses on the edges of the grooves of the insert, adding a dynamic component to the already present static one.

To summarize, two contrasting requirements arise: on the one hand it is necessary to provide deep grooves in the insert in order to ensure optimum tightness, but on the other hand it would be desirable to have a substantially smooth profile for the insert in order to avoid the accumulation of stresses at the edges of the grooves, particularly at the edge that is upstream of the end portion of the insert.

DE-12 47 092 B discloses a connector and an insert as defined in the preamble of independent claims 1 .

### Disclosure of the Invention

The aim of the present invention is to provide an insert for connectors for high-pressure rubber hoses in which the tightness and reliability characteristics are improved with respect to a conventional connector.

Within the scope of this aim, an object of the present invention is to provide an insert for connectors for high-pressure rubber hoses in which the axial sliding of the rubber of the hose is facilitated during ring compression, avoiding immobility, jamming and tearing of the material.

Another object of the present invention is to provide an insert for connectors for high-pressure rubber hoses in which one of the two discontinuities of adjacent grooves can be eliminated in order to reduce the concentration of stresses.

Another object of the present invention is to provide a connector for high-pressure rubber hoses in which the insert can be adapted to a plurality of different rings, hoses and tightening systems, since it closely resembles the ideal configuration of a smooth insert.

Another object of the present invention is to provide a connector for high-pressure rubber hoses in which ring tightening allows better stress distribution.

Another object of the present invention is to provide a connector for high-pressure rubber hoses which is highly reliable, relatively easy to manufacture and at competitive costs.

This aim, these objects and others which will become apparent hereinafter are achieved by an insert for connectors as defined in claim 1, and by its combination with a ring as defined in claim 2.

### Brief Description of the Drawings

Further characteristics and advantages of the present invention will become apparent from the following detailed description of a preferred but not exclusive embodiment of the connector according to the invention, illustrated only by way of non-limitative example in the accompanying drawings, wherein:
Figure 1 is a side view of an insert which is part of the connector according to the present invention;
Figure 2 is a side view of a ring which is part of the connector according to the present invention; and
Figure 3 is an enlarged view of a detail of the profile of one of the grooves formed on the outer surface of the insert in the connector according to the present invention.

### Ways of carrying out the Invention

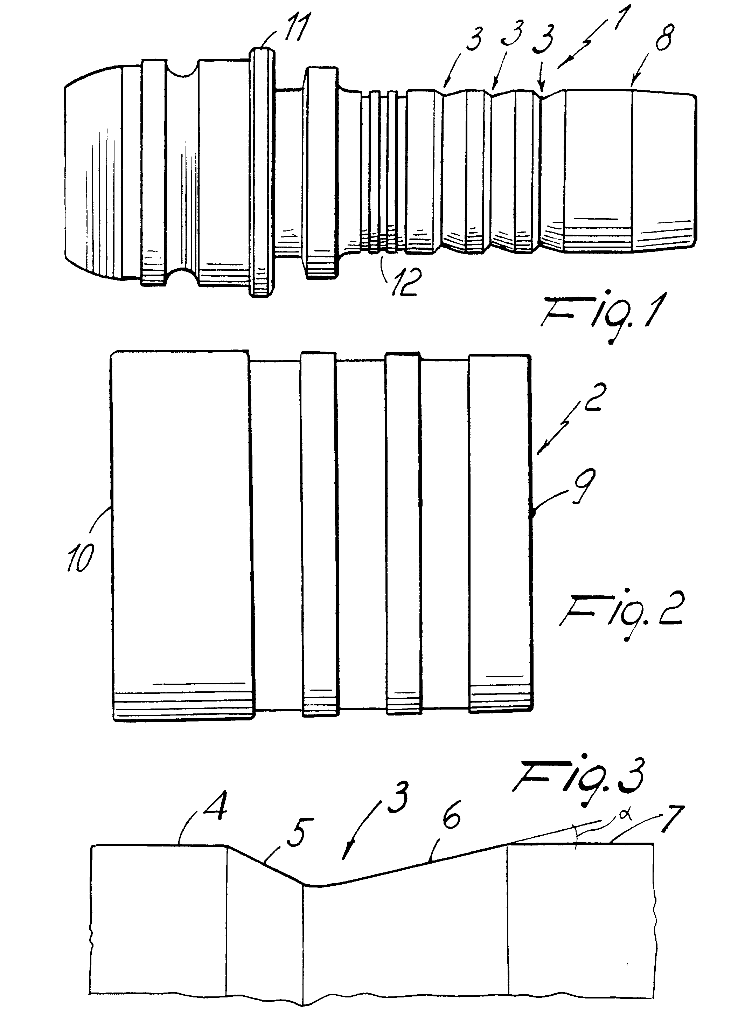

With reference to the above figures, the insert according to the invention is shown in Figure 1, and an adapted ring 2 is shown in Figure 2.

The insert 1 is constituted by a substantially cylindrical body which has, on its outer surface, at least one groove 3 inclined toward the end for the insertion of the insert 1 in a rubber hose (not shown).

Advantageously, it has been observed that it is ideal to provide a number of grooves 3 which can vary between one and six according to the size of the insert, but it is possible to provide a different number of grooves as deemed convenient.

The grooves 3 have a profile as shown in detail in Figure 3. Each groove 3 therefore has, from the upstream region toward the downstream region of the insert, a first straight portion 4, parallel to the axis of the insert 1, and a first inclined portion 5, which is blended along a curved profile with the first straight portion 4 and, also with a curved profile, with a second inclined portion 6, which in turn is blended with a second straight portion 7 which is also parallel to the axis of the insert 1.

The deepest point of the groove 3 is arranged asymmetrically with respect to the centerline of the groove.

The inclination α of the second inclined portion 6 with respect to the second straight portion 7 can be variable, for example between 1 and 30 degrees.

The grooves 3 are arranged in a central region of the portion of the insert 1 that is meant to be inserted in the rubber hose and are preceded, in an upstream region, by a plurality of microgrooves 12, which have a quadrangular profile and are of the conventional type, and in a downstream region by a conical-cylindrical portion 8 which allows the mobility of the rubber hose to be damped gradually.

The conical-cylindrical portion thus allows the cyclic contractions of the rubber hose to be damped gradually.

The microgrooves 12 having a more conventional profile have the purpose of providing an additional seal of the labyrinth type, which becomes effective mainly in advanced aging conditions.

The ring 2 is instead shaped so as to have a profile with annular portions whose outside diameter increases from the region 9 meant to be arranged at the last groove 3 to the region 10 meant to abut against a flange 11 of the insert 1.

The inclined portion 6 of each one of the grooves 3 also increases tightness against infiltrations of fluid, since the radial compression applied by the ring 2 to the high-pressure hose fitted over the insert 1, by acting on an inclined plane, generates an axial component which would tend to make the insert 1 exit from the rubber hose; this is prevented by the continuity constraint, so that the resultant at right angles to the inclined plane is greater than the radial component, thus increasing the sealing effect of the rubber of the hose on the profile of the insert 1.

In practice it has been observed that the connector according to the invention fully achieves the intended aim, since it allows to increase the tightness of the rubber hose around the insert by means of the clamping action applied by the outer ring.

The grooves, having a negative profile and inclined toward the outlet region of the insert, allow to reduce the stresses applied to the rubber of the hose when a high-pressure fluid flows inside it, producing mobility of the rubber hose on the insert and therefore producing damaging jamming of the rubber on the edges of the grooves required to ensure tightness.

In this manner, the grooves formed on the insert according to the invention act as stress reduction elements. This is also allowed by the coupling with the locking ring, since the compression force applied by the ring acts on the rubber of the hose which, being incompressible, is elongated toward the outlet region of the insert and thus redistributes along the insert, being assisted in this by the circular cross-section of the ring, which decreases in diameter toward the outlet portion of the insert, and by the cylindrical-conical configuration of the outlet portion of the insert.

Another advantage of the connector according to the present invention is provided by the fact that the greater uniformity of the stresses transmitted from the insert to the rubber hose as a consequence of the movements of said hose with respect to conventional insert types makes it less difficult to match the profile of the insert with the profile of the ring and thus considerably increases the possibility to standardize the insert, using it accordingly on a large number of hoses with different types of ring and tightening system.

This entails a saving in production costs and a reduction of inventory.

The connector thus conceived is susceptible of numerous modifications and variations, all of which are within the scope of the claims.

Thus, for example, it is possible to provide, instead of the conventional grooves having a quadrangular profile 12, a plurality of microgrooves which allow to increase tightness.

In practice, the materials employed, so long as they are compatible with the specific use, as well as the dimensions, may be any according to requirements and to the state of the art.

## Claims

1. An insert (1) for connectors for high-pressure rubber hoses, comprising a substantially cylindrical body which has a region meant to be inserted in a rubber hose, and having, on its outer surface and in a central region, at least one annular asymmetric groove (3) which is inclined toward the outlet portion of the insert in order to guide the distribution of localized tensions and avoid tears in the elastomeric substrate, **characterized in that** said at least one groove (3) has a profile comprising a first straight portion (4) which blends along a curved portion with a first inclined portion (5) which blends with a second inclined portion (6), which is in turn blended with a second straight portion (7), said first and second straight portions being parallel to the longitudinal axis of said insert.

2. The insert of claim 1, **characterized in that** it comprises a locking ring (2) to lock the rubber hose around the insert.

3. The insert of claim 1, **characterized in that** said at least one groove (3) has a profile defining a cavity which has a rounded bottom, the deepest point whereof is axially offset with respect to the centerline of said groove

4. The insert according to claim 1, **characterized in that** said insert (1) has, in a region upstream of said at least one groove (3), a plurality of grooves (12) having a quadrangular profile.

5. The insert according to claim 1, **characterized in that** said insert (1) has, in a region upstream of said at least one groove (3), a plurality of microgrooves (12).

6. The insert according to claim 1, **characterized in that** said insert (1) has, downstream of said at least one groove (3), a cylindrical-conical portion (8).

7. The insert according to claim 2, **characterized in that** said ring (2) is constituted by a substantially cylindrical body which is formed by rings whose diameter increases from a region (9) that is meant to be directed toward the outlet of said insert to a region (10) that is meant to abut against a shoulder (11) of said insert.

## Patentansprüche

1. Einsatz (1) für Verbinder für Hochdruckgummischläuche mit einem im wesentlichen zylindrischen Körper, der einen zur Einführung in einen Gummischlauch bestimmten Bereich hat, und der auf seiner äußeren Oberfläche und in einem zentralen Bereich wenigstens eine ringförmige asymmetrische Nut (3) hat, die gegen den Auslassbereich des Einsatzes geneigt ist, um die Verteilung lokalisierter Spannungen zu führen und Risse im Elastomerträger zu verhindern, **dadurch gekennzeichnet, dass** die wenigstens eine Nut (3) ein Profil mit einem ersten geraden Abschnitt (4) aufweist, der entlang eines gekrümmten Abschnitts in einen ersten geneigten Abschnitt (5) übergeht, der in einen zweiten geneigten Abschnitt (6) übergeht, der wiederum in einen zweiten geraden Abschnitt (7) übergeht, wobei der erste und zweite gerade Abschnitt parallel zur Längsachse des Einsatzes sind.

2. Einsatz nach Anspruch 1,
**dadurch gekennzeichnet, dass** er einen Klemmring (2) umfasst, um den Gummischlauch um den Einsatz herum festzuklemmen.

3. Einsatz nach Anspruch 1,
**dadurch gekennzeichnet, dass** die wenigstens eine Nut (3) ein eine Vertiefung definierendes Profil hat, die einen gerundeten Boden hat, dessen tiefster Punkt hinsichtlich der Mittellinie der Nut axial verschoben ist.

4. Einsatz nach Anspruch 1,
**dadurch gekennzeichnet, dass** der Einsatz (1) in einem Bereich stromaufwärts der wenigstens einen Nut eine Vielzahl von Nuten (12) mit viereckigem Profil hat.

5. Einsatz nach Anspruch 1,
**dadurch gekennzeichnet, dass** der Einsatz (1) in einem Bereich stromaufwärts der wenigstens einen Nut eine Vielzahl von Mikronuten (12) hat.

6. Einsatz nach Anspruch 1,
**dadurch gekennzeichnet, dass** der Einsatz (1) stromabwärts der wenigstens einen Nut (3), einen zylindrisch-konischen Abschnitt (8) hat.

7. Einsatz nach Anspruch 2,
**dadurch gekennzeichnet, dass** der Ring (2) aus einem im wesentlichen zylindrischen Körper besteht, der aus Ringen gebildet ist, deren Durchmesser von einem Bereich (9), der bestimmt ist zum Auslass des Einsatzes gerichtet zu sein, zu einem Bereich (10) zunimmt, der bestimmt ist, gegen einen Absatz (11) des Einsatzes zu stoßen.

## Revendications

1. Une pièce de raccordement (1) pour raccords pour flexibles haute pression en caoutchouc, comprenant un corps sensiblement cylindrique qui possède une région conçue pour être insérée dans un flexible en caoutchouc, et présentant, sur sa surface extérieure et dans une région centrale, au moins une rainure annulaire asymétrique (3) qui est inclinée vers la partie d'orifice de sortie de la pièce de raccordement afin de guider la répartition de tensions localisées et éviter les déchirures dans le substrat en élastomère, **caractérisée en ce que** ladite au moins rainure (3) présente un profil comprenant une première partie droite (4) qui se mêle le long d'une partie incurvée à une première partie inclinée (5) qui se mêle à une partie incurvée d'une seconde partie inclinée (6), qui à son tour se mêle à une seconde partie droite (7), lesdites première et seconde parties droites étant parallèles par rapport à l'axe longitudinal de ladite pièce de raccordement.

2. La pièce de raccordement selon la revendication 1, **caractérisée en ce qu'**elle comprend une bague de fermeture (2) pour verrouiller le flexible en caoutchouc autour de la pièce de raccordement.

3. La pièce de raccordement selon la revendication 1, **caractérisée en ce que** ladite au moins une rainure (3) présente un profil définissant une cavité qui présente un fond arrondi, dont le point le plus profond est décalé de manière axiale par rapport à l'axe de ladite rainure.

4. La pièce de raccordement selon la revendication 1, caractérisée en cc que ladite pièce de raccordement (1) présente, dans une région en amont de ladite au moins rainure (3), une pluralité de rainures (12) présentant un profil quadrangulaire.

5. La pièce de raccordement selon la revendication 1, **caractérisée en ce que** ladite pièce de raccordement (1) présente, dans une région en amont de ladite au moins rainure (3), une pluralité de micro-rainures (12).

6. La pièce de raccordement selon la revendication 1, **caractérisée en ce que** ladite pièce de raccordement (1) présente, en aval de ladite au moins rainure (3), une partie cylindre-conique (8).

7. La pièce de raccordement selon la revendication 2, **caractérisée en ce que** ladite bague (2) est composée d'un corps sensiblement cylindrique qui est formé par des bagues dont le diamètre augmente à partir d'une région (9) qui est conçue pour être dirigée vers l'orifice de sortie de ladite pièce de raccordement vers une région (10) qui est conçue pour buter contre un épaulement (11) de ladite pièce de raccordement.
